# FASCICULE DE BREVET EUROPEEN

(11) **EP 2 740 200 B1**
(45) Date de publication et mention de la délivrance du brevet: **25.10.2017**
(21) Numéro de dépôt: 12753769.4
(22) Date de dépôt: 30.07.2012
(51) Int. Cl.: H02K 11/00, H02K 41/02, H02K 33/12, H02K 33/02

(54) **ENSEMBLE COMPACT DE POSITIONNEMENT COMPRENANT UN ACTIONNEUR ET UN CAPTEUR INTÉGRÉ DANS LA CULASSE DE L'ACTIONNEUR**
KOMPAKTE POSITIONIERUNGSANORDNUNG MIT EINEM STELLGLIED UND EINEM IN DAS JOCH DES STELLGLIEDS INTEGRIERTEN SENSOR
COMPACT POSITIONING ASSEMBLY COMPRISING AN ACTUATOR AND A SENSOR BUILT INTO THE YOKE OF THE ACTUATOR

(30) Priorité: 01.08.2011 FR 1157043
(43) Date de publication de la demande: 11.06.2014
(73) Titulaire: Moving Magnet Technologies, 25000 Besançon (FR)
(72) Inventeur: RIOS-QUESADA, Javier, 25000 Besançon (FR); DELBAERE, Michaël, 25720 Avanne (FR); LOUSSERT, Guillaume, 25000 Besançon (FR)
(74) Mandataire: IP Trust
(86) Numéro de dépôt international: PCT/FR2012/051797
(87) Numéro de publication internationale: WO 2013/017794

(56) Documents cités:
- EP-A2- 0 076 726
- FR-A1- 2 670 629
- JP-A- 2001 214 858
- US-A1- 2005 098 153
- US-A1- 2007 176 497
- US-A1- 2009 039 713

## Description

### Domaine de l'invention

La présente invention concerne un ensemble électromécanique destiné à réaliser un positionnement linéaire ou rotatif et comprenant un actionneur électrique et un capteur de position dans lequel le capteur de position est entièrement intégré dans le volume de l'actionneur et présente une insensibilité au moins partielle au champ magnétique produit par l'actionneur.

### État de la technique

Dans le domaine des ensembles de positionnement électrique, l'utilisation de capteurs de position magnétiques pour détecter la position d'un organe mobile d'un actionneur est bien connue de l'état de la technique. Dans la plupart des cas, la détection de position se fait à l'aide d'un dispositif rapporté sur l'actionneur, comme dans la demande FR2887376 qui propose l'utilisation d'un capteur ayant un aimant permanent rapporté sur la culasse de l'actionneur dans une configuration permettant l'insensibilité du capteur au champ magnétique produit par l'actionneur. Ce type de dispositif permet une détection analogique fiable (connaissance de la position de la partie mobile relativement à la partie statorique fixe) mais présente un inconvénient majeur qui est son relatif encombrement qui vient s'ajouter à celui de l'actionneur. Même si sa réalisation compacte est souvent mise en avant, tout en garantissant une immunité au champ magnétique crée par l'actionneur lui-même, il reste que l'ensemble actionneur-capteur formé est l'assemblage de deux sous-ensembles distincts dont l'encombrement total est la somme des encombrements des sous-ensembles. D'autre part, dans la plupart des cas d'actionneurs, on ne peut bénéficier d'une configuration mécanique agissant naturellement comme blindage magnétique telle que décrite dans la demande FR2887376. Ainsi non seulement l'encombrement d'une telle solution est excessif et d'autre part le capteur ainsi empilé au-dessus de son actionneur requiert des pièces ferromagnétiques additionnelles nécessaires au blindage de ce dernier de façon à minimiser l'impact des champs magnétiques issus de l'actionneur sur le capteur.

De même, l'on connait la demande FR2791487 qui présente l'intégration d'une sonde magnétosensible à l'intérieur du circuit magnétique par création d'un entrefer supplémentaire. L'intégration du capteur est ainsi optimale du point de vue de l'encombrement mais cela se fait au détriment de la force ou couple produit par l'actionneur. En effet, dans le cas d'actionneurs à aimants mobiles, l'introduction d'un entrefer dans les parties ferromagnétiques fixes ou mobiles induit une modification de la forme de l'effort produit par la création d'une composante réluctante (c'est-à-dire sans courant) non constante sur la course. Cette force non constante peut être problématique dans certaines applications. De plus, l'introduction de cet entrefer supplémentaire diminue aussi l'effort de type proportionnel car induit une perte de potentiel plus importante dans le circuit magnétique ainsi modifié. Enfin, puisque le flux magnétique crée par la bobine passe aussi par l'entrefer de mesure, le signal de la sonde est très dépendant du courant et nécessite donc une connaissance du courant pour effectuer la correction appropriée.

Dans quelques applications, les performances demandées par l'actionneur sont telles que tout l'encombrement disponible doit être utilisé pour son dimensionnement de sorte qu'il n'y a plus de place pour installer un capteur à son extrémité ou à sa périphérie.

Différentes solutions existent alors pour disposer d'une détection de position intégrée, notamment par la mesure de l'inductance de la bobine lorsque celle-ci évolue avec la position. Cependant, cette technique requiert, d'une part, une électronique de commande particulièrement sensible et difficile à régler, et d'autre part, elle n'est pas envisageable pour des actionneurs à aimants mobiles dits "proportionnels" dont l'inductance n'est pas ou peu modifiée en fonction de la position. Dans ce cas, le recours à un capteur additionnel, hors du volume de l'actionneur est alors nécessaire.

On connait aussi le brevet US20050098153 qui propose, dans le cadre d'un actionneur de positionnement rotatif, d'intégrer le capteur magnétique à l'intérieur de la culasse mobile. Si l'encombrement est ainsi diminué par rapport aux solutions à capteur extérieur rapporté, la non-symétrie de l'actionneur rend le capteur très sensible au champ émis par l'actionneur.

La demande de brevet japonais JP2001/214858 décrit un actionneur comprenant un moteur linéaire et de moyens de détection pour détecter la position de l'objet d'entraînement. Cet actionneur comprend un élément de détection qui est situé hors de l'axe de symétrie de l'actionneur, de sorte que l'insensibilité au champ magnétique de l'actionneur n'est possible que par l'utilisation d'un blindage imposant autour de l'élément de détection.

La demande de brevet US2007/0176497 décrit un système d'actionnement en rotation comprenant un système de commande et un actionneur rotatif-linéaire ayant un plongeur mobile et des bobines associées. Les bobines peuvent être mis sous tension pour interagir avec des aimants associés pour effectuer un mouvement correspondant du piston, qui peut comprendre de rotation et / ou un mouvement linéaire. L'interface réseau facilite la réception d'informations de commande au système de commande du système d'actionnement rotatif-linéaire à partir du réseau intégré. Le système de commande peut contrôler un amplificateur pour exciter les bobines sur la base de l'information de commande.

La demande de brevet EP0076726 décrit un appareil de réfrigération cryogénique à cycle de Stirling comprenant un corps mobile alternativement situé dans un boîtier de corps contenant un fluide de travail. Le moyen d'entraînement mécanique est couplé audit corps pour effectuer un mouvement alternatif dudit corps à l'intérieur dudit boîtier pour sélectivement étendre et comprimer ledit fluide de travail. Des moyens de palier de non-contact sur ledit boîtier et pouvant être actionné pour centrer ledit corps dans ledit boîtier.

### Exposé de l'invention

La présente invention se propose de résoudre ces principaux inconvénients cités en proposant un ensemble compact de positionnement comprenant notamment un capteur de position intégré à l'intérieur de l'actionneur et ne présentant pas de sensibilité au champ magnétique émis par ce dernier.

Particulièrement, l'invention se destine à améliorer la détection de position de la partie mobile d'un actionneur présentant une géométrie symétrique ou périodique par rapport à un axe central de l'ensemble de positionnement, appelé axe principal, que l'actionneur soit rotatif ou linéaire.

L'invention concerne plus particulièrement un ensemble de positionnement conforme à la revendication indépendante 1. Les revendications 2 à 15 concernent des modes de réalisation avantageux de l'invention. Suivant l'invention, l'insensibilité du capteur au champ magnétique généré par l'actionneur est garantie par le positionnement d'au moins un élément magnétosensible sur l'axe principal. En effet, l'axisymétrie ou la périodicité de l'actionneur assure que tout champ magnétique produit par l'actionneur est théoriquement à direction tangente sur son axe de symétrie. Ainsi, en positionnant au moins un élément magnétosensible sur cet axe et en orientant son axe de sensibilité perpendiculairement à cet axe principal, on s'assure de l'insensibilité du capteur. Suivant l'invention, l'insensibilité du capteur au champ magnétique généré par l'actionneur est garantie par la configuration de la culasse entourant complètement l'élément magnétosensible, favorisant ainsi un blindage magnétique sans nécessité de pièces additionnelles. Cela est notamment rendu nécessaire lorsque la direction du champ magnétique est détectée (et non son amplitude), car nécessitant au moins deux axes de sensibilité perpendiculaires. Si une composante peut être rendue insensible aux champs extérieurs, la deuxième composante nécessite un blindage. Cette fonction est naturellement remplie par la culasse mais son optimisation de forme peut être rendu nécessaire en fonction de la géométrie et des performances demandées.

Le capteur défini par la présente invention peut se destiner aussi bien à un actionneur linéaire qu'à un actionneur rotatif où ses qualités de compacités et d'insensibilité au champ émis par l'actionneur se retrouvent mises en oeuvre de la même manière.

La présente invention expose le principe général d'intégration compact d'un capteur au sein d'un actionneur sans modifier l'encombrement de ce dernier. Les diverses technologies d'actionneurs et capteurs magnétiques ne sont pas exposées ici de façon exhaustive mais pourront être choisies et mises en oeuvre dans une intégration selon la présente invention par l'homme de métier ayant à disposition un art antérieur conséquent et détaillé bien connu.

### Description détaillée des figures

D'autres caractéristiques et avantages de l'invention ressortiront à la lecture qui suit d'exemples de réalisation détaillés, en référence aux figures annexées qui représentent respectivement :
- la figure 1, l'ensemble de positionnement, en version linéaire, selon un premier mode de réalisation comprenant un actionneur à aimants mobiles, vu selon un plan de coupe,
- la figure 2, une vue de détail du capteur de position de la figure 1, vu selon un plan de coupe,
- la figure 3, une vue de trois-quarts de l'ensemble de positionnement présenté en figures 1 et 2,
- les figures 4a et 4b, l'ensemble de positionnement, en version linéaire, selon un deuxième mode de réalisation comprenant un actionneur à aimants mobiles,
- les figures 5a et 5b, l'ensemble de positionnement, en version rotative,
- les figures 6a et 6b, l'ensemble de positionnement, en version linéaire, selon un troisième mode de réalisation comprenant un actionneur hybride à aimants mobiles et réluctance variable,
- les figures 7a et 7b, l'ensemble de positionnement, en version linéaire, selon un quatrième mode de réalisation comprenant un actionneur hybride à aimants mobiles et réluctance variable.

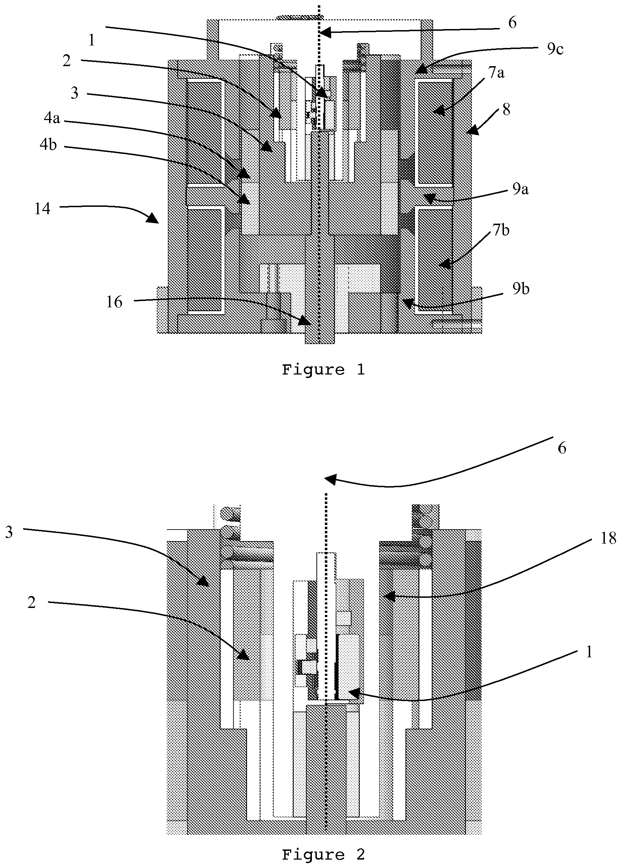

La figure 1 présente un premier mode de réalisation de l'invention où l'actionneur est à aimants mobiles (4a, 4b) et présente un comportement dit « proportionnel ». En effet, la force produite sur la course de l'actionneur est constante et proportionnelle au courant injecté dans les bobines électriques (7a et 7b) comme décrit dans la demande FR 2682542.

Cet actionneur est formé d'un ensemble statorique fixe composé de deux bobines (7a, 7b) reliées en série ou en parallèle et d'un stator ferromagnétique (10) formé d'un tube ferromagnétique (8) extérieur, d'un pôle ferromagnétique central (9a) et de deux pôles ferromagnétiques latéraux (9b, 9c).

L'actionneur comprend aussi un ensemble mobile, relativement à l'ensemble statorique, formé d'une culasse ferromagnétique (3) sur laquelle sont fixés deux aimants (4a, 4b) permanents solidaires d'un arbre de sortie (16) servant à déplacer un organe extérieur quelconque suivant l'axe principal (6). L'actionneur formé présente ainsi une axisymétrie autour de l'axe principal (6) et les aimants (4a, 4b) présentent avantageusement une aimantation radiale, c'est-à-dire suivant un rayon partant de l'axe principal (6). Lorsque les bobines (7a, 7b) sont alimentées, les pôles (9a, 9b, 9c) au stator sont polarisés de telles sorte que les aimants (4a, 4b) sont attirés dans une position préférentielle où les champs magnétiques sont alignés. De par la forme et le dimensionnement des différents pôles magnétiques formés au stator et à la partie mobile, la force obtenue pour un courant d'alimentation donné est constante sur une course définie pouvant être typiquement de plusieurs millimètres, ici voisine de 5 mm.

Le capteur selon la présente invention, dont on apprécie une vue isolée en figure 2, est installé à l'intérieur de la culasse (3) dans un évidement (18) de cette dernière, et formé par un aimant du capteur (2) solidaire de la culasse (3) et une sonde magnétosensible (1) fixe relativement à l'ensemble statorique de l'actionneur. De manière préférentielle mais non limitative, cette sonde (1) est placée près de l'axe d'axisymétrie (6) afin de s'affranchir du champ magnétique produit par l'actionneur. En effet, de par l'axisymétrie de cet actionneur, le champ magnétique produit par les bobines (7a, 7b) et les aimants (4a, 4b) est théoriquement nul sur toutes les directions perpendiculaires à l'axe d'axisymétrie (6). Cette propriété peut ainsi être utilisée pour placer au moins un des éléments magnétosensible de la sonde (1) sur, ou proche de, l'axe d'axisymétrie (6), de façon à ce que sa direction de sensibilité soit perpendiculaire à l'axe (6), n'étant ainsi sensible qu'à l'amplitude ou la direction du champ magnétique produit par l'aimant capteur (2). Dans ce mode de réalisation, l'aimant capteur (2) se présente sous la forme de deux bagues aimantées radialement n'entravant pas la libre rotation de l'axe de l'actionneur au cours de son déplacement linéaire, mais ce mode de réalisation de l'aimant n'est pas limitatif.

Cependant, cette position d'insensibilité intrinsèque à l'actionneur n'est pas requise dans tous les modes de réalisation lorsque la culasse (3), comme illustrée en figure 1, est dimensionnée afin de réaliser un blindage magnétique efficace garantissant à la sonde (1) une immunité au champ magnétique issu de l'actionneur. Le dimensionnement de la culasse (épaisseur, hauteur,...) est ainsi dicté par le niveau minimal de champ magnétique perturbateur accepté par la sonde (1) suivant l'application et le niveau de précision demandé au capteur.

Le positionnement de la sonde magnétosensible (1) près de l'axe de révolution de l'actionneur et sur la partie haute de la culasse (3) permet d'utiliser une partie de cette culasse (3) qui n'est généralement pas utile au flux magnétique car correspondant à une section relativement faible par rapport aux sections principales de passage de flux dans l'actionneur et éloignée du centre, suivant la hauteur, de l'actionneur où la saturation éventuelle est la plus marquée. Ainsi, le positionnement du capteur au centre de l'actionneur dans la culasse n'a quasiment pas d'influence sur le comportement de l'actionneur avec courant. Seul le comportement avec les plus forts courants électriques - cas où la saturation magnétique est prononcée - peut être modifié, mais ce cas de figure ne correspond qu'à une utilisation ponctuelle de l'actionneur qui ne correspond pas à son mode de fonctionnement continu.

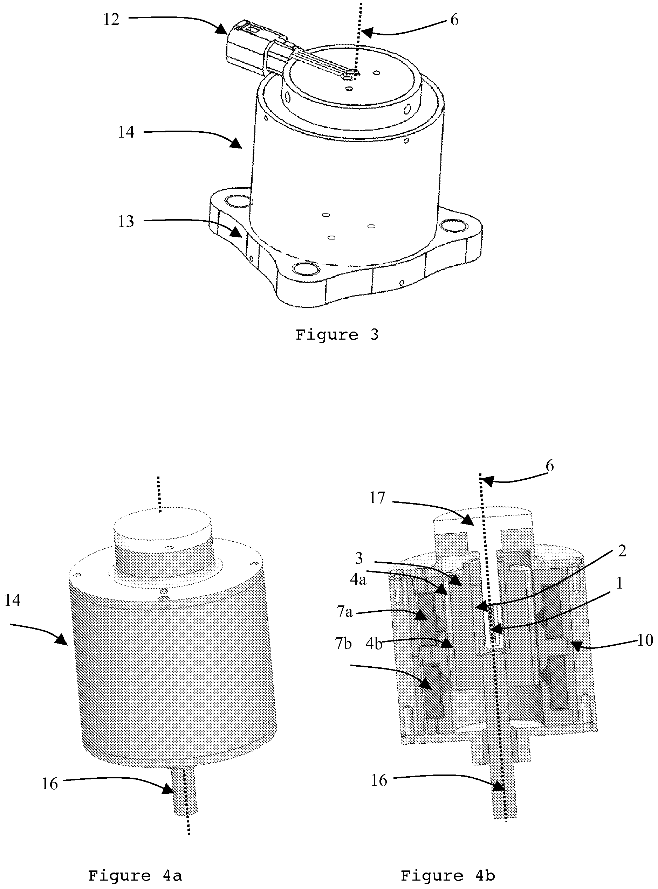

La figure 3 présente l'ensemble de positionnement dans une vue pleine où l'on remarque la géométrie de révolution de l'actionneur (11) autour de l'axe d'axisymétrie (6). Dans cet exemple de réalisation, un connecteur électrique (12) est visible sur la partie supérieure de l'ensemble de positionnement permettant la connexion de l'actionneur et du capteur (15) de l'ensemble de positionnement (14). Cet ensemble de positionnement (14) peut être fixé sur un support extérieur à l'aide d'un élément de fixation percé (13). L'arbre de sortie (16), non visible sur cette figure 3, est ainsi connecté à l'organe à déplacer par le bas de l'ensemble de positionnement (14).

La figure 4a présente un ensemble de positionnement (14) dans un deuxième mode de réalisation vue de l'extérieur, et la figure 4b ce même ensemble de positionnement (14) dans une vue en coupe détaillant l'intérieur et tous les éléments constituants. La course de cet actionneur est bien supérieure à celle de l'actionneur des figures 1 à 3, soit voisine de 15 mm.

Sur cette vue de la figure 4b, on retrouve la même architecture de l'actionneur (11) formé pour son ensemble statorique par trois pôles (9a, 9b et 9c), deux bobines électriques (7a, 7b) et présentant pour son ensemble mobile une culasse (3) portant deux aimants (4a, 4b) et déplaçant un arbre de sortie (16), selon l'axe (6), destiné à actionner un organe extérieur dépendant de l'application visée. L'ensemble actionneur ainsi formé présente une symétrie de révolution autour de l'axe (6).

A l'intérieur de la culasse (3) évidée est placé le capteur de position formé par un aimant parallélépipédique (2) solidaire de la culasse (3) et une sonde magnétosensible (1), type sonde de Hall positionnée sur l'axe d'axisymétrie (6) de l'ensemble de positionnement (14). Positionnée sur cet axe (6), la sonde (3) présente au moins un de ses axes de sensibilité orienté selon une direction perpendiculaire à l'axe de révolution (6) afin d'être insensible au champ magnétique produit par l'actionneur et de détecter uniquement l'amplitude ou la direction du champ magnétique produit par l'aimant capteur (2). Cette sonde (1) est portée par un élément (17) assurant le guidage de la culasse (3) voire évitant la rotation de celle-ci, cet élément (17) ayant ainsi une fonction double, permettant de garder un caractère compact à l'ensemble de positionnement (14) formé.

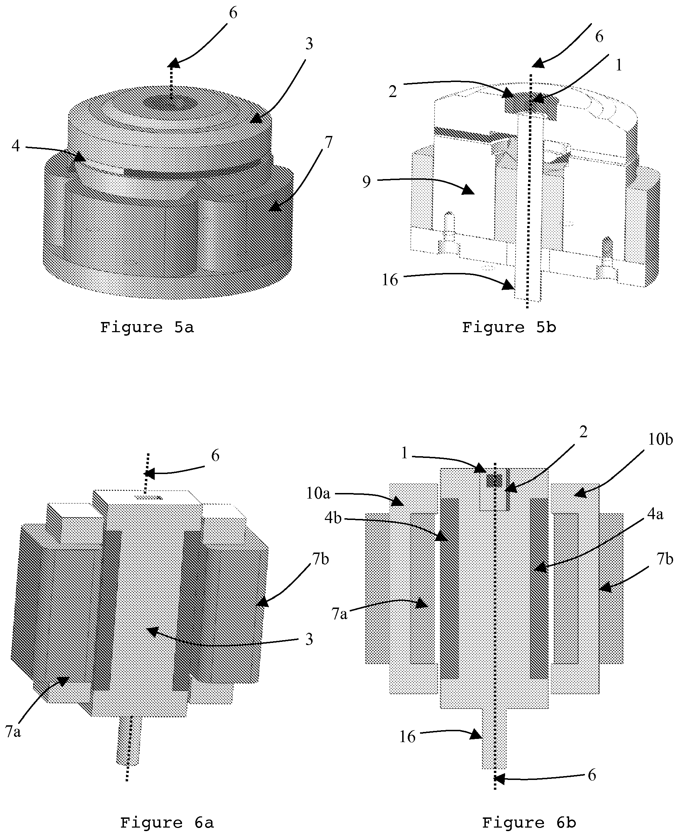

La figure 5a montre l'ensemble de positionnement (14) selon un mode de réalisation rotatif, et la figure 5b ce même ensemble suivant une vue de coupe transversale passant par l'axe principal (6) de l'ensemble (14). La partie actionneur, suivant les enseignements de la demande FR2670629, est composée de 4 pôles ferromagnétiques (9) identiques portant chacun une bobine électrique (7), l'ensemble statorique ainsi formé étant fixé à une base (5) ferromagnétique. Au-dessus de cet ensemble statorique formé, séparé par un entrefer, est positionné l'ensemble mobile en rotation par rapport à l'ensemble statorique dans un plan perpendiculaire à l'axe principal (6). Cet ensemble mobile est formé par une culasse (3) portant un disque aimanté (4) composé de 4 secteurs aimantés. L'actionneur ainsi formé présente une périodicité de 90° autour de l'axe principal (6).

La partie détection est assurée par un aimant capteur (2) solidaire de la culasse (3) dans un évidement (18) réalisé dans cette dernière. Une sonde magnétosensible (1) est positionnée sur ou proche de l'axe principal (6), fixe par rapport à l'aimant capteur (2). La périodicité de l'actionneur assure que, en tout point de l'axe principal (6), le champ magnétique normal à cet axe (6) est théoriquement nul, assurant une direction d'insensibilité au champ magnétique émis par l'actionneur à la sonde (2).

La figure 6a montre l'ensemble de positionnement (14) suivant un autre mode de réalisation linéaire, et la figure 6b ce même ensemble suivant un plan de coupe passant par l'axe principal (6). Dans ce mode de réalisation, l'actionneur formé par une culasse ferromagnétique (3) mobile portant deux aimants (4a, 4b) présente une géométrie extrusive mais une périodicité de 180° autour de l'axe principal (6). En effet, par cette périodicité autour de l'axe principal (6), l'aimant (4a) correspond bien à l'aimant (4b) et, au stator, le stator ferromagnétique (10a) et la bobine (7a) correspondent bien au stator ferromagnétique (10b) et à la bobine (7b). De cette façon, le champ magnétique produit l'actionneur (aimants et bobines) est théoriquement nul dans la direction orthogonale à l'axe principal (6) sur cet axe (6). Cette caractéristique est avantageusement mise à profit pour installer, dans la culasse (3) évidée (18) de l'actionneur, un aimant capteur (2) solidaire de cette culasse (3) et une sonde magnétosensible (1) positionnée au voisinage de l'axe (6) de manière à ce qu'au moins un de ses axes de sensibilité soit sur l'axe (6) selon une direction orthogonale. De cette manière, l'insensibilité de la sonde (1) au champ magnétique de l'actionneur est assurée.

Sur ces figures 6a et 6b, l'actionneur est du type hybride, présentant un encastrement d'aimant (4a, 4b) dans la culasse (3) et générant une composante de force axiale, suivant l'axe (6), d'origine proportionnelle et une composante d'origine quadratique suivant le courant, comme expliqué dans la demande FR 2774824 dont est issue cette construction.

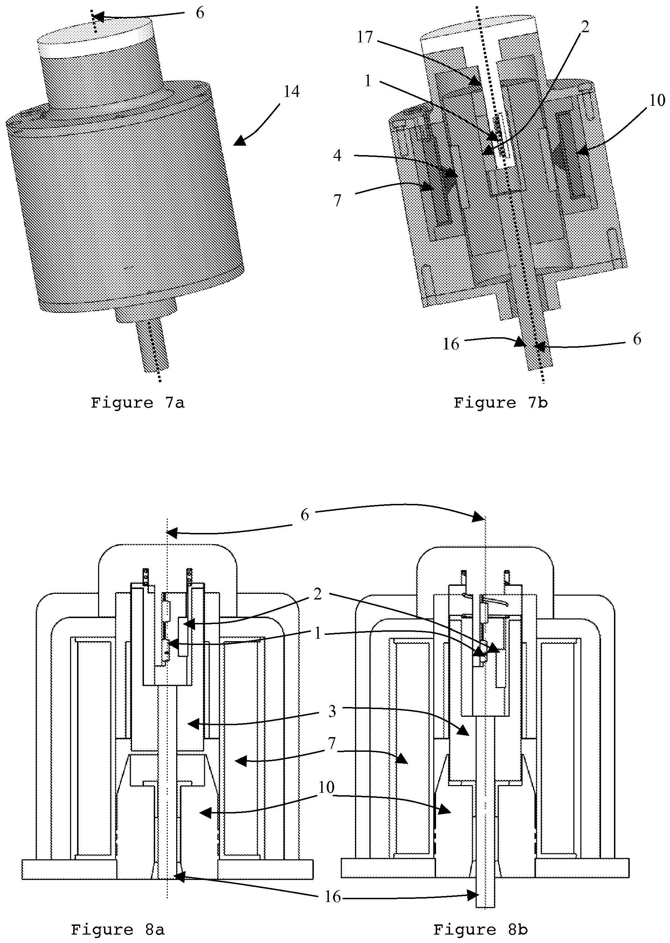

Les figures 7a et 7b, respectivement vues pleine et en coupe d'un autre mode de réalisation de l'ensemble de positionnement (14), présentent un ensemble de positionnement (14) ayant les mêmes propriétés que l'ensemble de positionnement (14) des figures 4a et 4b sauf pour la fonction actionneur. Cette dernière est réalisée avec un actionneur hybride, à réluctance variable et avec aimants semblable, dans le principe, à celui déjà présenté en figures 6a et 6b dans une version extrusive. La culasse (3) porte ainsi un aimant (4) encastré dans ladite culasse (3) et la partie statorique est constituée d'une seule bobine (7) de révolution autour de l'axe principal (6).

Les figures 8a et 8b représentent deux vues en coupe d'un même actionneur dont la culasse (3) mobile est dans deux positions différentes. Il s'agit d'un actionneur à réluctance variable, communément appelé « solénoïde », composé d'un stator ferromagnétique (10) présentant localement une forme conique et une bobine électrique (7). Par variation de la réluctance lorsque le courant électrique circule dans la bobine (7), la culasse (3) est attirée vers le bas de l'actionneur, comme montré en figure 8b. Lorsque le courant ne circule plus dans la bobine, la culasse (3) est dans une position haute comme montrée en figure 8a ramenée par exemple par un ressort (non représenté ici) qui exerce une force de rappel sur l'axe du « solénoïde ». L'actionneur présente une géométrie axisymétrique autour de l'axe principal (6) sur lequel se situe une sonde magnétosensible (1) immobile par rapport au stator (10) et dont au moins l'un des axes de sensibilité est dans la direction orthogonale à l'axe principal (6). Par l'axisymétrie, cet axe de sensibilité de la sonde (1) ne reçoit aucun champ magnétique généré par la bobine électrique (7). Un aimant capteur (2) est solidaire de la culasse (3) et se déplace donc en face de la sonde (1) en fonction de la position de la culasse (3) relativement au stator (10).

## Revendications

1. Ensemble de positionnement (14) comprenant un capteur de position et un actionneur magnétique, ledit actionneur comprenant un ensemble statorique formé d'au moins un stator ferromagnétique (10) portant au moins une bobine électrique (7) d'alimentation, et une culasse mobile (3) relativement à l'ensemble statorique, ladite culasse (3) présente un évidement (18) intérieur comprenant un axe principal (6) de l'actionneur ledit capteur présentant au moins un aimant permanent (2) placé à l'intérieur de l'évidement (18) solidaire de ladite culasse (3) et au moins une sonde magnétosensible (1) placée au voisinage de l'axe principal (6) à l'intérieur de l'évidement (18), avec au moins un axe de détection orienté perpendiculairement audit axe principal (6), fixe par rapport à l'aimant (2) et apte à mesurer l'amplitude ou la direction du champ magnétique émis par ledit aimant (2),
**caractérisé en ce que** ledit actionneur présente une géométrie de révolution ou périodique autour dudit axe principal (6) passant par ladite culasse (3).

2. Ensemble de positionnement selon les revendications 1 ou 2 **caractérisé en ce que** l'actionneur électromagnétique est un actionneur comprenant au moins un aimant mobile (4), placé sur la culasse mobile (3).

3. Ensemble de positionnement selon les revendications 1 **caractérisé en ce que** l'actionneur électromagnétique est un actionneur à réluctance variable sans aimant.

4. Ensemble de positionnement selon les revendications 1 **caractérisé en ce que** l'actionneur électromagnétique est un actionneur hybride à réluctance variable et à aimants permanents (4).

5. Ensemble de positionnement selon l'une des revendications précédentes **caractérisé en ce que** l'élément magnétosensible (1) est une sonde de Hall ou magnétorésistive sensible à l'amplitude du champ magnétique émis par ledit aimant (2) du capteur.

6. Ensemble de positionnement selon l'une des revendications 1 à 4 **caractérisé en ce que** la sonde magnétosensible (1) est une sonde de Hall sensible à la direction du champ magnétique émis par ledit aimant (2) du capteur.

7. Ensemble de positionnement selon l'une des revendications précédentes **caractérisé en ce que** ledit aimant capteur (2) est entièrement à l'intérieur de l'évidement (18) de la culasse (3).

8. Ensemble de positionnement selon l'une des revendications précédentes **caractérisé en ce que** ladite sonde magnétosensible (1) est portée par un support agissant comme guide mécanique de ladite culasse (3).

9. Ensemble de positionnement selon l'une des revendications précédentes **caractérisé en ce que** l'aimant capteur (2) présente une aimantation variable en intensité ou en direction selon la direction de déplacement.

10. Ensemble de positionnement selon l'une des revendications 1 à 8 **caractérisé en ce que** l'aimant capteur est unipolaire, c'est-à-dire présentant une seule direction d'aimantation et présentant une géométrie uniforme selon la direction de déplacement ou une géométrie variable selon la direction de déplacement.

11. Ensemble de positionnement selon l'une des revendications 1 à 8 **caractérisé en ce que** l'aimant capteur est constitué d'un acier rémanent.

12. Ensemble de positionnement selon l'une quelconque des revendications précédentes **caractérisé en ce que** ledit actionneur est rotatif.

13. Ensemble de positionnement selon l'une quelconque des revendications 1 à 11 précédentes **caractérisé en ce que** ledit actionneur est linéaire.

14. Ensemble de positionnement selon la revendication précédente **caractérisé en ce que** ledit actionneur (11) comprend un ensemble statorique formé de trois pôles (9a, 9b et 9c), deux bobines électriques (7a, 7b) et un ensemble mobile formé par une culasse (3) portant deux aimants (4a, 4b) et déplaçant un arbre de sortie (16), ledit actionneur présentant une symétrie de révolution autour de l'axe (6).

15. Ensemble de positionnement selon la revendication précédente **caractérisé en ce que** ledit capteur de position est formé par un aimant (2) parallélépipédique solidaire de la culasse (3) et une sonde magnétosensible (1), positionnée sur l'axe d'axisymétrie (6) de l'ensemble de positionnement (14) et **en ce que** la sonde type sonde de Hall présente au moins un de ses axes de sensibilité orienté selon une direction perpendiculaire à l'axe de révolution (6), ladite sonde (1) étant portée par un élément (17) assurant le guidage de la culasse et évitant la rotation de celle-ci.

16. Ensemble de positionnement selon la revendication 12 **caractérisé en ce que** ledit actionneur est composée de 4 pôles ferromagnétiques (9) identiques portant chacun une bobine électrique (7), l'ensemble statorique ainsi formé étant fixé à une base (5) ferromagnétique, l'ensemble mobile formé par une culasse (3) portant un disque aimanté (4) composé de 4 secteurs aimantés est positionné au-dessus dudit ensemble statorique, séparé par un entrefer.

## Patentansprüche

1. Positionierungseinheit (14), welche einen Positionssensor und ein magnetisches Stellglied umfasst, wobei das Stellglied eine Statoreinheit aufweist, welche gebildet wird aus mindestens einem ferromagnetischen Stator (10), der mindestens eine elektrische Versorgungsspule (7) trägt, und ein Joch (3), das relativ zur Statoreinheit beweglich ist, wobei das Joch (3) im Innern eine Aussparung (18) aufweist, welche eine Hauptachse (6) des Stellglieds umfasst, wobei besagter Sensor mindestens einen Dauermagneten (2) aufweist, der im Innern der Aussparung (18) verbunden mit dem Joch (3) positioniert ist und mindestens eine magnetempfindliche Sonde (1), die neben der Hauptachse (6) im Innern der Aussparung (18) platziert ist, mit mindestens einer Detektionsachse, die senkrecht zur besagten Hauptachse (6) ausgerichtet, in Bezug auf den Magneten (2) feststehend und in der Lage ist, die Amplitude oder die Richtung des von besagtem Magneten (2) ausgestrahlten Magnetfeldes zu messen, **dadurch gekennzeichnet, dass** besagtes Stellglied eine umlaufende oder periodische Geometrie um die Hauptachse (6) aufweist, in die besagtes Joch (3) einbezogen ist.

2. Positionierungseinheit nach den Ansprüchen 1 oder 2, **dadurch gekennzeichnet, dass** das elektromagnetische Stellglied auf dem beweglichen Joch (3) mindestens einen beweglichen Magneten (4) aufweist.

3. Positionierungseinheit nach Anspruch 1, **dadurch gekennzeichnet, dass** das elektromagnetische Stellglied eine variable Reluktanz ohne Magnet aufweist.

4. Positionierungseinheit nach Anspruch 1, **dadurch gekennzeichnet, dass** das elektromagnetische Stellglied hybrid ist und eine variable Reluktanz und Dauermagneten (4) aufweist.

5. Positionierungseinheit nach einem der vorhergehenden Ansprüche, **dadurch gekennzeichnet, dass** das magnetempfindliche Element (1) eine Hall-Sonde oder eine magnetoresistive Sonde ist, die für die Amplitude des von besagtem Magneten (2) des Sensors ausgestrahlten Magnetfeldes sensibel ist.

6. Positionierungseinheit nach einem der Ansprüche 1 bis 4, **dadurch gekennzeichnet, dass** die magnetempfindliche Sonde (1) eine Hall-Sonde ist, die sensibel für die Richtung des von besagtem Magneten (2) des Sensors ausgestrahlten Magnetfeldes ist.

7. Positionierungseinheit nach einem der vorhergehenden Ansprüche, **dadurch gekennzeichnet, dass** sich besagter Magnet des Sensors (2) komplett im Innern der Aussparung (18) des Joches (3) befindet.

8. Positionierungseinheit nach einem der vorhergehenden Ansprüche, **dadurch gekennzeichnet, dass** besagte magnetempfindliche Sonde (1) getragen wird von einem Träger, der als mechanische Führung für dieses Joch (3) dient.

9. Positionierungseinheit nach einem der vorhergehenden Ansprüche, **dadurch gekennzeichnet, dass** der Magnet des Sensors (2) je nach Bewegungsrichtung eine Magnetisierung veränderlicher Stärke oder Richtung aufweist.

10. Positionierungseinheit nach einem der Ansprüche 1 bis 8, **dadurch gekennzeichnet, dass** der Magnet des Sensors (2) einpolig ist, das heißt, er weist eine einzige Magnetisierungsrichtung auf und hat eine einheitliche Geometrie gemäß der Bewegungsrichtung oder eine variable Geometrie gemäß der Bewegungsrichtung.

11. Positionierungseinheit nach einem der Ansprüche 1 bis 8, **dadurch gekennzeichnet, dass** der Magnet und Sensor aus remanentem Stahl besteht.

12. Positionierungseinheit nach einem der vorhergehenden Ansprüche, **dadurch gekennzeichnet, dass** besagtes Stellglied drehbar ist.

13. Positionierungseinheit nach einem der vorhergehenden Ansprüche 1 bis 11, **dadurch gekennzeichnet, dass** das Stellglied linear ist.

14. Positionierungseinheit nach dem vorhergehenden Anspruch, **dadurch gekennzeichnet, dass** das Stellglied (11) eine Statoreinheit umfasst, die aus drei Polen (9a, 9b und 9c) gebildet wird, zwei elektrische Spulen (7a, 7b) und eine bewegliche Einheit, die durch ein Joch (3) gebildet wird, das zwei Magneten (4a, 4b) trägt und eine Austrittswelle (16) verschiebt, wobei das Stellglied eine Rotationssymmetrie um die Achse (6) aufweist.

15. Positionierungseinheit nach dem vorhergehenden Anspruch, **dadurch gekennzeichnet, dass** der Positionssensor durch einen quaderförmigen Magneten (2) gebildet wird, der mit dem Joch (3) verbunden ist, und eine magnetempfindliche Sonde (1), welche auf der achsensymmetrischen Mittellinie (6) der Positionierungseinheit (14) positioniert ist, und dadurch, dass die Sonde vom Typ Hall-Sonde mindestens eine ihrer Empfindlichkeitsachsen in eine Richtung senkrecht zur Rotationsachse (6) gerichtet hat, wobei die Sonde (1) getragen wird von einem Element (17), das die Führung des Jochs gewährleistet und die Drehung desselben vermeidet.

16. Positionierungseinheit nach Anspruch 12, **dadurch gekennzeichnet, dass** das besagte Stellglied aus 4 ferromagnetischen identischen Polen (9) besteht, die jeweils eine elektrische Spule (7) tragen, wobei die So gebildete Statoreinheit auf einem ferromagnetischen Sockel (5) befestigt ist, und die bewegliche Einheit, die durch ein Joch (3) gebildet wird, auf dem sich eine magnetisierte Scheibe (4) mit 4 magnetisierten Abschnitten befindet, durch einen Spalt getrennt auf der Statoreinheit positioniert wird.

## Claims

1. A positioning assembly (14) comprising a position sensor and a magnetic actuator, with said actuator comprising a stator assembly consisting of at least one ferromagnetic stator (10) carrying at least one electric power supply coil (7), and a yoke (3) able to move relative to the stator assembly, with said yoke (3) having an inner recess (18) comprising a main axis (6) of the actuator, with said sensor having at least one permanent magnet (2) positioned inside said recess (18) integral with said yoke (3) and at least one magneto-sensitive probe (1) positioned in the vicinity of the main axis (6) inside the recess (18), with at least one detection axis oriented perpendicularly to said main axis (6), stationary relative to the magnet (2) and able to measure the amplitude or the direction of the magnetic field emitted by said magnet (2),
**characterized in that** said actuator has a geometry that is of revolution or periodic about said main axis (6) passing through said yoke (3).

2. A positioning assembly according to claim 1,
**characterized in that** the electromagnetic actuator is an actuator comprising at least one mobile magnet (4), positioned on the mobile yoke (3).

3. A positioning assembly according to claim 1,
**characterized in that** the electromagnetic actuator is a variable reluctance actuator without magnet.

4. A positioning assembly according to claim 1,
**characterized in that** the electromagnetic actuator is a variable reluctance and permanent magnet (4) hybrid actuator.

5. A positioning assembly according to one of the preceding claims, **characterized in that** the magneto-sensitive element (1) is a Hall or magnetoresistive sensor sensitive to the amplitude of the magnetic field emitted by said magnet (2) of the sensor.

6. A positioning assembly according to one of claims 1 to 4, **characterized in that** the magneto-sensitive sensor (1) is a Hall sensor sensitive to the direction of the magnetic field emitted by said magnet (2) of the sensor.

7. A positioning assembly according to one of the preceding claims, **characterized in that** said sensor magnet (2) is positioned totally inside the recess (18) of the yoke (3).

8. A positioning assembly according to one of the preceding claims, **characterized in that** said magneto-sensitive sensor (1) is carried by a support acting as a mechanical guide of said yoke (3).

9. A positioning assembly according to one of the preceding claims, **characterized in that** the sensor magnet (2) has a magnetization with variable intensity or direction, according to the direction of displacement.

10. A positioning assembly according to one of claims 1 to 8, **characterized in that** the sensor magnet is single-pole, i.e. having only one magnetization direction and having a uniform geometry according to the direction of displacement or a variable geometry, according to the direction of displacement.

11. A positioning assembly according to one of claims 1 to 8, **characterized in that** the magnet sensor is made of residual steel.

12. A positioning assembly according to any one of the preceding claims, **characterized in that** said actuator is rotary.

13. A positioning assembly according to any one of the preceding claims 1 to 11, **characterized in that** the actuator is linear.

14. A positioning assembly according to the preceding claim, **characterized in that** said actuator (11) comprises a stator assembly consisting of three poles (9a, 9b, 9c), two electric coils (7a, 7b) and a mobile assembly consisting of a yoke (3) carrying two magnets (4a, 4b) and moving an output shaft (16), with said actuator having a geometry that is of revolution about the axis (6).

15. A positioning assembly according to the preceding claim, **characterized in that** said position sensor consists of a parallelepiped-shaped magnet (2) integral with the yoke (3) and a magneto-sensitive probe (1), positioned on the axis of symmetry (6) of the positioning assembly (14) and **in that** the probe of the Hall probe type has at least one of its sensitive axes oriented in a direction perpendicular to the axis of revolution (6), with said probe (1) being carried by an element (17) and guiding the yoke while preventing the rotation thereof.

16. A positioning assembly according to claim 12, **characterized in that** said actuator consists of 4 identical ferromagnetic poles (9), each carrying an electric coil (7), with the stator assembly thus formed being attached to a ferromagnetic base (5), the mobile assembly consisting of a yoke (3) carrying a magnetized disk (4) consisting of 4 magnetized sectors is positioned above said stator assembly, separated by an air gap.
